# EUROPEAN PATENT SPECIFICATION

(11) **EP 3 696 011 B1**
(45) Date of publication and mention of the grant of the patent: **30.08.2023**
(21) Application number: 20156452.3
(22) Date of filing: 10.02.2020
(51) Int. Cl.: B60L 53/16, B60L 53/18, B60L 50/20

(54) **CHARGING SYSTEM AND METHOD OF A BATTERY OF AN ELECTRIC VEHICLE**
LADESYSTEM UND VERFAHREN EINER BATTERIE EINES ELEKTROFAHRZEUGS
SYSTÈME ET PROCÉDÉ DE CHARGE D'UNE BATTERIE D'UN VÉHICULE ÉLECTRIQUE

(30) Priority: 12.02.2019 IT 201900002003; 07.02.2020 IT 202000002455
(43) Date of publication of application: 19.08.2020
(60) Divisional application: 21153640.4
(73) Proprietor: Ferrari, Massimo, 25040 Monticelli Brusati, (BS) (IT)
(72) Inventor: Ferrari, Massimo, 25040 Monticelli Brusati, (BS) (IT)
(74) Representative: Chimini, Francesco

(56) References cited:
- EP-A1- 2 677 607
- EP-A1- 2 995 496
- US-A1- 2008 048 611

## Description

The present invention relates to a charging system and method of the battery of electric vehicles, in particular of electric bicycles or pedal-assisted vehicles.

The increasing diffusion of electric vehicles, in particular of bicycles, is also leading to the local installation of charging stations adapted to charge the battery of electric vehicles.

In order to be able to charge, it is necessary to have a charging cable with an electrical connector that connects to a corresponding electrical connector on the charging station and, at the opposite end, an electrical connector that connects to the battery of the electric vehicle.

One of the problems which afflict such charging systems based on locally installed charging stations is the compatibility with different types and brands of batteries.

For example, batteries may differ from one another for a different supply voltage, typically 36 V or 48 V.

Patent application EP 2583859 A2 aims to solve the problem of different supply voltages by providing the charging cables with an electronic identification device, e.g. an RFID tag, a barcode or a QR-code, which contains information about the supply voltage, and the charging station with an electronic reading device capable of receiving the information contained in the electronic identification device and of communicating which supply voltage is to be used to a control unit of the charging station.

An examination of the different batteries on the market has also shown that there are two types of batteries which differ by a different charging method; the first, simpler type of battery allows the battery to be charged as soon as current is supplied to the terminals of the charging cable; the second type of battery, on the other hand, requires the battery to receive a control signal to connect the battery poles to the charging cable.

This difference in the charging mode is also reflected in a multiplication of the circuits and of the charging cables.

Another problem of the charging systems currently used is that while the charging station is designed to comply with electrical standards and the strictest safety regulations, it is not possible to be sure that the charging cable used by the user is also compatible with such standards and safety regulations.

A non-conforming cable may not only be dangerous but may also cause damage to both the charging station and the battery to be charged. US2008048611A1 discloses a method and system for recharging a battery power supply unit, wherein a battery charger is provided with a multipolar connector which can be connected/disconnected with a corresponding multipolar connector of the electronic apparatus. EP2677607A1 discloses an adapter including a first connection portion that corresponds in geometry to an inlet and a second connection portion that corresponds in geometry to a power supply plug of electrical equipment external to a vehicle.

It is an object of the present invention to solve, at least in part and in a simple and cost-effect manner, the aforesaid drawbacks connected to the different charging modes.

It is another object of the present invention to provide a charging system and method which allow ensuring that the charging service is delivered in a safe and efficient manner which respects the integrity of the charging station and of the vehicle battery.

Such objects are achieved by a charging system according to claim 1. The dependent claims describe preferred embodiments of the invention.

According to an aspect of the invention, the charging system of a battery of an electric vehicle, in particular a bicycle, comprises a charging station and at least one charging cable connectable to a battery to be charged. The charging station comprises at least one power unit provided with a power card adapted to charge the battery and with a female-type connector adapted to connect to a male-type connector of the charging cable.

The features and advantages of the charging method and system according to the invention will be apparent from the following description which illustrates preferred embodiments, given by way of indicative, nonlimiting examples, with reference to the accompanying figures, in which:

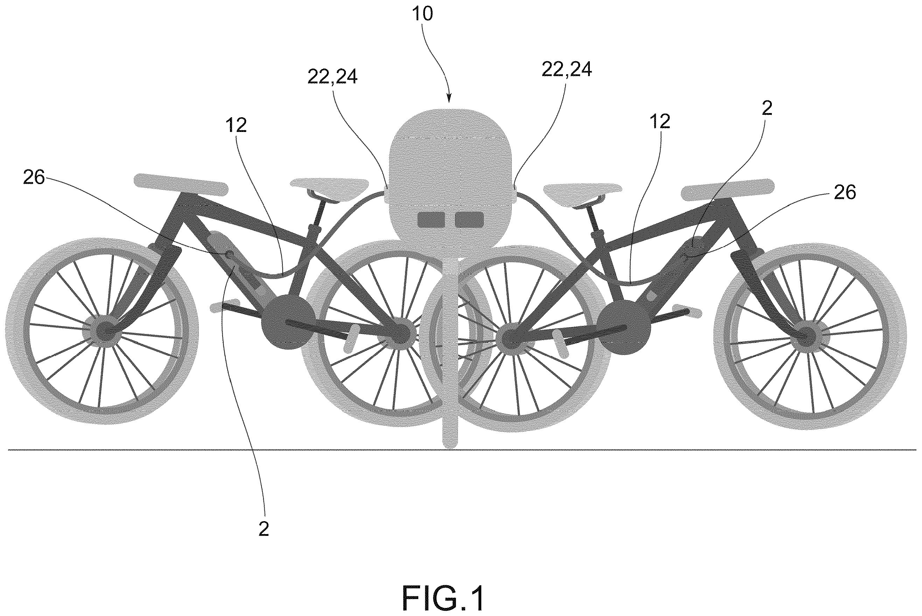

- figure 1 shows a charging system according to the invention;
- figure 2 is a wiring diagram of the charging system;
- figure 3 is a block chart of the hardware and software components of a charging station;
- figure 4 is a flow chart of an authentication algorithm of a charging cable; and
- figure 5 is a flow chart of a user identification algorithm.

In said drawings, a charging system of batteries of electric vehicles according to the invention is indicated with reference numeral 1 as a whole.

The charging system 1 comprises a charging station 10 and at least one charging cable 12, which is connnectable to a battery 2 to be charged, e.g. the battery or accumulator of an electric or pedal-assisted bicycle.

The charging station 1 may be a public station installed near roads, parking lots, public buildings, etc.

The charging cable 12 connects the charging station 10 to the battery to be charged.

The charging system 10 comprises a power supply unit 14 adapted to generate at least one battery supply voltage. The battery supply voltage generated by the power supply unit 14 is thus adapted to charge the battery 2 at the working voltage expected for the battery 2.

The charging system 10 further comprises a service power unit 16 adapted to generate at service voltage. Such a service voltage is not used to supply the battery but to supply further electronic devices of the charging station 10, as described below. The service power unit 16 may be separated from the power supply unit 14 or can be made inside the power supply unit 14.

The charging station 10 is managed by a control unit 18 which is operatively connected to the power supply unit 14 and the service supply unit 16. For example, the control unit 18 is supplied by the operating voltage.

The charging station 10 further comprises a regulator 20 connected to the control unit 18 and adapted to supply a regulated charging current to the battery 2 to be recharged.

For connecting to the charging cable 12, the charging station 10 is provided with at least one female-type multipole charging connector 22, i.e. an electric socket.

This multipole charging connector 22 comprises:
- a negative terminal A and a positive terminal B, both connected to the regulator 20;
- a logic input C operatively connected to the control unit 18;
- a digital logic output D operatively connected to the control unit 18.

The charging cable 12 comprises a first male-type multipole cable connector 24 adapted to be connected to the multipole charging connector 22, and, at the opposite end of the cable, a second multipole cable connector 26 connectable to the battery 2.

The second cable connector 26 is configured to connect to the connector on the battery 2 to be charged.

The first multipole cable connector 24 comprises:
- a negative terminal A' and a positive terminal B' connectable to the negative and positive poles of the battery 2 (by means of the second multipole cable connector 26) and to the negative A and positive B terminals of the multipole charging connector 22 (by means of the first multipole cable connector 24);
- a connected connector check terminal C', connected to the negative terminal A' of the first multipole cable connector 24 and connectable to the logic input C of the multipole charging connector 22;
- a battery enabling terminal D' adapted to be connected to the digital logic output D of the multipole charging connector 22.

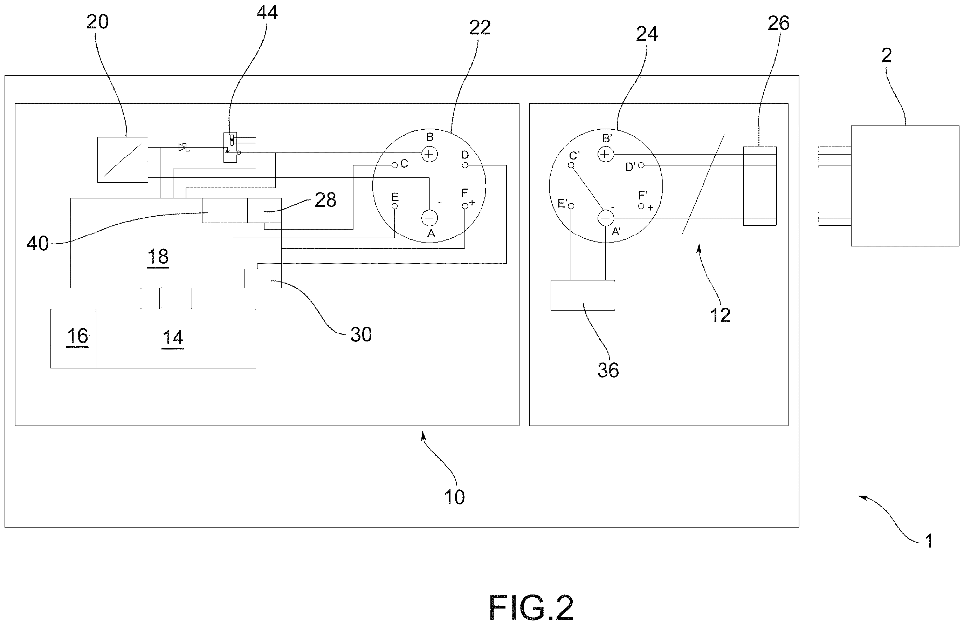

The second multipole cable connector 26 has a number of poles which depends on the type of battery 2 to be charged. In particular, for batteries of the first type, i.e. which allow charging as soon as current is supplied to the terminals of the charging cable, the second multipole cable connector 26 can have only two poles (positive and negative pole); for the second type of battery, i.e. which requires to be queried by a control signal to connect the battery poles to the charging cable, in addition to the positive and negative poles there will be a third pole for the control signal (as in the example shown in figure 2).

Turning back to the control unit 18, it is provided with a connected connector check circuit 28, operatively connected to the logic input C of the multipole charging connector 22 and adapted to detect whether the logic input C is at the voltage present on the negative pole of the battery 2. In the affirmative case, it means that charging cable 12 is correctly connected both to the battery 2 to be charged and to the charging connector 22.

The control unit 18 is also provided with a battery enabling circuit 30 adapted to provide an enabling signal to the digital logic output D adapted to allow the connection of one of the battery poles, e.g. the positive pole, to the corresponding terminal of the charging cable, e.g. the positive terminal B'.

In an embodiment, the control unit 18 has a further voltage presence input I connected to the positive terminal B of the multipole charging connector 22. Usually, this voltage presence input is at a zero logic value; if a battery of the second type is connected, in reply to the reception of the enabling signal D, the battery 2 enables the transmission of its own voltage level on the positive pole B' of the male multipole cable connector 24, and thus on the voltage presence input I. In the case of a battery of the first type, on the other hand, the internal protections with which it is provided do not allow the charging cable to read the voltage at the ends of the battery and the voltage presence input I remains at zero logic value.

In an embodiment, the charging system 10 comprises a switch device 44, e.g. a relay, between the regulator 20 and the charging connector 22, which switch device is controlled by the control unit 18 to switch between an open position, in which it inhibits the passage of the charging electric current from the regulator 20 to the charging connector 22, and an open position, in which it allows the passage of the charging electric current from the regulator 20 to the charging connector 22.

In this embodiment, the voltage presence input I, if provided, is connected to the positive terminal B, downstream of the switch device 44.

The control unit 18 is programmed so as to implement the following battery charging procedure.

The correct connection of the battery charging cable is first checked by detecting, by means of the connected connector test circuit 28, whether the logic input C is at the voltage present on the negative battery pole 2.

In the affirmative case, the control unit 18 commands the battery enabling circuit 30 to supply the enabling signal to the digital logic output D.

The control unit 18 thus remains in a state of waiting for enabling for a predetermined time, after which the control unit 18 controls the delivery of charging current.

The predetermined time interval is chosen so that the batteries of the second type can receive and recognize the enabling signal and reply by connecting the battery poles to the charging cable. The predetermined time interval is preferably chosen on the basis of the longest response time among commercially available batteries of the second type.

In accordance with an embodiment, either before or during the state of waiting for enabling, the control unit 18 performs a step of self-diagnosing, in which it runs internal tests on the charging station to check that the electrical charging parameters correspond to the expected values, so as to prevent any malfunctioning of the charging station from affecting the connected battery.

For example, the control unit detects the value of the voltage output to the regulator 20 by means of a regulated voltage input H.

During this step of self-diagnosing, the switch device 44, if present, is left in the open position to protect the connected battery and is closed by the control unit 18 only if no malfunctions are detected during the step of self-diagnosing.

In an embodiment, at the end of the step of waiting for enabling, the control unit 18 checks whether a voltage corresponding to the positive pole of the battery is present on the voltage presence input I. In the affirmative case, it means that the connected battery 2 is of the second type.

Therefore, once the connected connector check circuit 28 has detected a correct connection and the predetermined time interval of the step of waiting for enabling has elapsed, the control unit 18 can establish which of the two types of battery is connected, between the first type with direct access and the second type with access conditioned by the battery enabling signal.

In an embodiment, the control unit 18 is programmed to charge the battery 2 with two different charging algorithms according to the connected battery type.

In an embodiment, the power supply unit 14 is adapted to generate at least two different battery supply voltages, e.g. a first voltage adapted to charge a 36 V battery and a second voltage adapted to charge a 48 V battery.

The charging system 1, in this case, comprises at least two charging cables 12, a first cable for charging a battery with a first working voltage and a second cable for charging a battery with a second working voltage.

Advantageously, the two charging cables 12 are the same in terms of the number and the function of the terminals.

In particular, the multipole charging connector 22 and the first multipole cable connector 24 has an additional voltage identification terminal F, F', respectively. The voltage identification terminal of the multipole charging connector F is connected to the control unit 18.

The two cables can be identified in that only the voltage identification terminal F' is connected to either the positive terminal B' or the negative terminal A' in one of the two charging cables 12. In this manner, the control unit 18 can detect a different voltage on the voltage identification terminal F according to whether said voltage identification terminal F is either connected to or disconnected from the positive or negative terminal of cable connector 24. Having identified the cable type and, consequently, the working voltage of the connected battery, the control unit supplies the corresponding battery supply voltage to the regulator 20.

For example, the control unit 18 is normally configured to deliver the lowest among the supply voltages. Indeed, most batteries currently operate at 36 V. When the control unit 18 detects the presence of a charging cable 12 for a battery with a higher working voltage, e.g. 48 V, the control unit 18 activates a voltage multiplying circuit to provide the appropriate voltage to the regulator 20.

In an embodiment, the first multipole cable connector 24 is provided with an authentication integrated circuit comprising a memory 36 containing information about the source of the charging cable 12 and connected to an additional communication terminal E' of the multipole cable connector 24.

The multipole charging connector 22 has a corresponding communication terminal E connected to control unit 18. The latter is provided with a receiver integrated circuit 40 adapted to receive data from the authentication integrated circuit by means of communication terminals E, E'.

For example, the receiver circuit 40 can send a query signal to the authentication integrated circuit.

Therefore, the authentication integrated circuit and the receiver integrated circuit form a pair of circuits capable of exchanging data for the main purpose of authenticating the charging cable.

For example, if the control unit 18 does not receive predetermined authentication information from the cable, it will not enable the delivery of the power voltage so as not to risk damaging the battery.

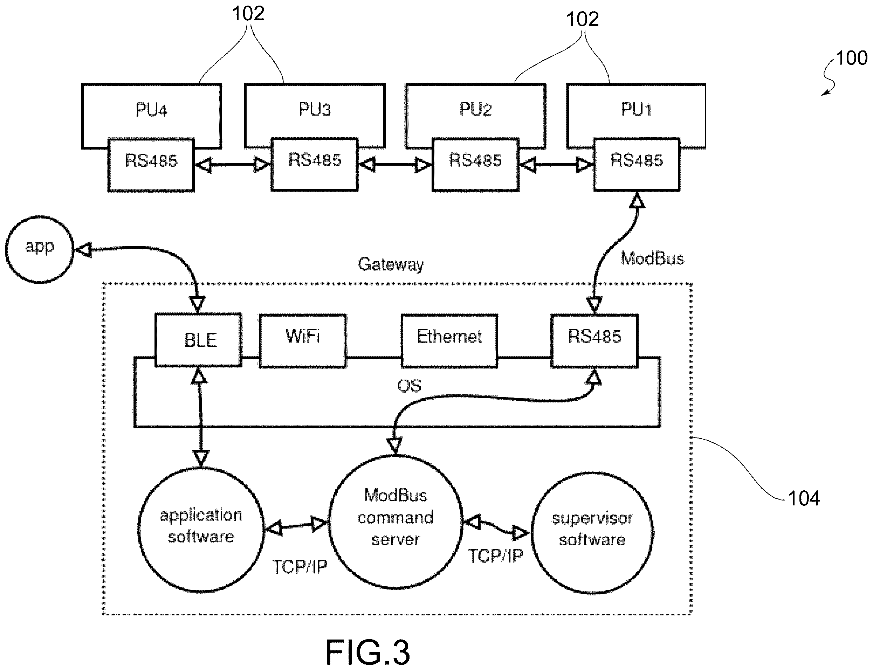

Figure 3 is a block chart that shows the hardware and software components of a charging station 100 in an illustrative example not part of the claimed invention.

The charging station 100 comprises one or more power units 102 and a gateway node 104 which allows control and communication with the outside world.

Each power unit 102 comprises a power card for charging a battery. For example, there are four power units 102 in the charging station 100, e.g. interconnected in daisy-chains on an RS485 serial line and connected to the gateway node 104.

In an illustrative example not part of the claimed invention, the gateway node 104 is made with an embedded microprocessor system on which the main software applications, which allow the delivery of configuration and control services are run. The gateway node 104 thus implements the control unit of the charging station.

The gateway node 104 allows the connection of the charging station to an existing telecommunications network.

For example, the following communication technologies are supported on the gateway node 104:
- IEEE 802.11 (Wi-Fi) in Station mode
- IEEE 802.11 (Wi-Fi) in Access Point (AP) mode
- IEEE 802.15.4 (Bluetooth)
- IEEE 802.3 (Ethernet)

All the connectivity methods listed above are independent and can operate simultaneously on separate networks.

In an illustrative example not part of the claimed invention, the power units 102 are controlled by the gateway node 104. For example, the communication with the power units 102 is performed by means of ModBus^{©} commands which allows sending execution requests. The applications on the gateway can interact with the power units 102 by means of a layer between the application layer and the operating system consisting of a command server (ModBus command server). The application accepts local TCP/IP requests and sends them to the power units while maintaining consistency and atomicity of ModBus transactions.

In an illustrative example not part of the claimed invention, the application-level software is mainly divided into two parts: user management software and control software.

As in greater detail described below, the management software (application software) has the task of interacting with user applications during the delivery of the service. This software allows the identification of the user connected via app on the BLE interface of the gateway node. Furthermore, the software application authorizes the delivery and controls the eligibility to use the service.

The control software (software supervisor) has the task of controlling the entire system during the operation and of reporting any critical issues.

Examples of charging cable authentication by the charging station 10;100 will now be described.

At the end of the physical assembly operations of the cable, each cable is equipped with a specific authentication integrated circuit 36 for its unique identification during service.

The authentication circuit has a read-only memory area that contains a unique cable identifier code (ROMID) which identifies each authentication circuit 36 and is inserted by the cable manufacturer.

For example, this memory area is made using DeepCover^{®} technology and prevents the tampering of the information contained within the chip.

The cable is therefore recorded in the manufacturing environment.

Furthermore, a unique cable identification token (CTID) is associated with each identifier code generated by the manufacturing system and used as a cable identifier during the steps of activating the charging cable, as will be described below.

In an illustrative example not part of the claimed invention, the unique token is implemented by a QR-Code, e.g. applied on the package of the cable purchased by the user. With this QR-Code, the user can access the online cable activation services.

The cable authentication circuit 36, in addition to the passive identification function, also performs an active hardware authentication function with the charging station 10; 100 through an authentication algorithm.

In an illustrative example not part of the claimed invention, the authentication algorithm is implemented with a symmetric (or pre-shared) key challenge-response authentication mechanism, SCRAM.

This mutual authentication mechanism allows the charging station to determine the authenticity of the connected cable on the hardware level. In order to authenticate the cable, each charging station is also equipped, e.g. within each power unit 102, with its own authentication circuit (e.g. the receiver integrated circuit 40 described above).

The authentication mechanism provides the generation of a MAC using the SHA256 hash function. In order to be authenticated, both parties must share the same encryption key used when composing the input for the function. The pre-shared key is the secret key used to ensure the non-repudiation of the parties. This key must be programmed in the memory area of both the authentication circuits in the cables and the charging station.

Authentication is symmetric and occurs in both directions. The charging station generates a 32-bit long random challenge by means of a true random number generator (TRNG) inserted inside the charging station and then sends the challenge to the cable. The authentication integrated circuit inside the cable calculates the digest of the challenge and of the pre-shared key programmed inside and returns the result to the authentication circuit of the charging station. At the same time, the authentication circuit of the charging station calculates the digest of the same challenge using the internally programmed pre-shared key. If the received digest and the generated digest are the same, then the cable is authenticated by the charging station; vice versa if the authentication fails.

The programming of the cables provides the writing of the pre-shared key in both authentication circuits.

The procedure for identifying the charging cables will now be described.

As mentioned above, the charging cables are provided with hardware specialized to ensure their unique identification. Each cable is unique and can be combined with the user of the service.

The unique identification of the cable ensures the non-clonability of the cables and the non-reproducibility of the cables. In other words, the unique identification of the cable allows limiting, if not preventing, the copying (cloning) of a cable, with the result of having two identical cables with the same ROMID, and the possibility for a competitor to make and offer cables compatible with the described system. This reduces the risk of spreading of counterfeit cables which could be dangerous if they do not comply with safety regulations and cause damage to both the charging station and the battery.

Furthermore, the coding of the cables in order to identify them individually also allows the autonomous collection of information during their use; indeed, when a cable is connected to a charging station, the internal hardware of the station can check the authenticity of the cable in order to identify it.

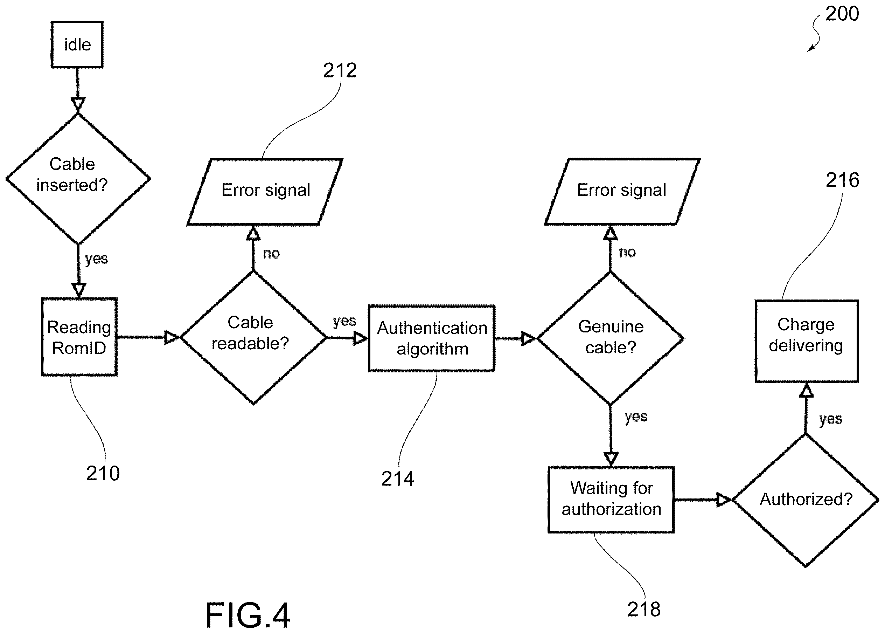

Figure 4 is a block chart of the authentication algorithm 200 of a cable.

Such an algorithm occurs in two steps: authentication and identification.

In a first step of identifying, when the cable is inserted into the connector of the charging station, the identifier code inside the cable (ROMID) is read by the charging station (step 210); if the cable can be read, the algorithm continues with the step of authenticating; otherwise, an error signal is generated (step 212).

The authenticity of the cable is checked during the second step of authenticating the inserted cable, (step 214), using an authentication algorithm, e.g. the symmetric key algorithm described above.

If the cable is genuine, then the charging station software proceeds by delivering the charge (step 216), possibly after waiting for authorization (step 218), e.g. from a service payment system.

A user identification process will now be described.

In some illustrative examples not part of the claimed invention, in addition to the authentication mechanism of the cable, there may be an additional mechanism for identifying the user of the delivery service, e.g. by means of an application that can be installed on smartphones.

The method comprises the following steps:
1. Buying a cable from the cable manufacturer
2. Registering the user on the cable manufacturer's website
3. Activating the purchased cable
4. Installing the application.

The registration of the user allows the collection of the user's personal and identification data, e.g. by email address and the generation of a password to access services that allow the unique identification of the user. Other personal data of the user concerning other aspects of the service may be collected during this step.

Once registered, each user is assigned a unique user identifier code (UID), which allows each user to be identified. Indeed, the activation of the cable requires the user to be logged into the online service of the cable manufacturer and the activation can be made only by the user in possession of the QR-Code associated with the package of the cable purchased or printed on the cable itself.

This step allows establishing a two-way relationship between the unique token (CTID) and the unique user identifier code (UID).

It is worth noting that a user may own and activate more than one cable; in this case, there will be a list of cables activated and owned by a single user.

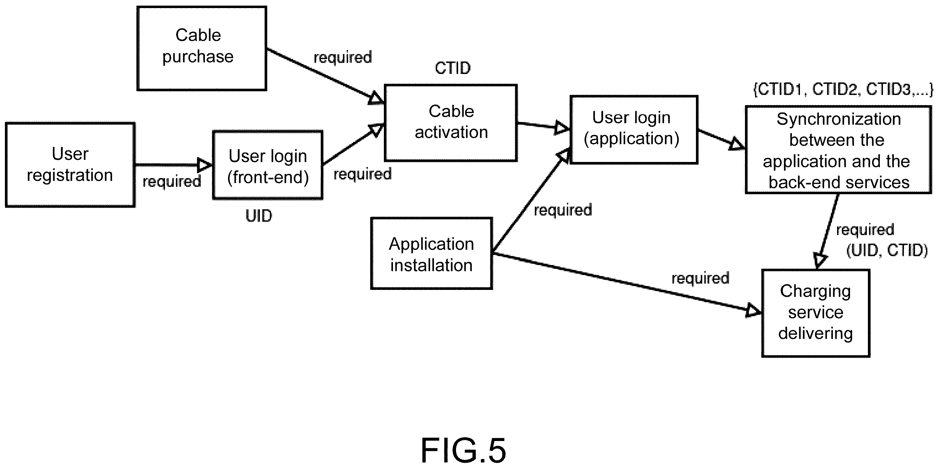

In an illustrative example not part of the claimed invention, the charging service is delivered after the user has been identified. Figure 5 shows an outline of the actions required to identify the user.

The functional requirement of the user login of the installed application and the synchronization between the application and the back-end services of the cable manufacturer are highlighted in particular. This step is necessary to keep a local copy of the user's activated cable list synchronized. The copy is made in one direction only using the information contained in the cable manufacturer's back-end as the master and the temporary copy kept on the application installed on the smartphone as the slave.

Any changes to a user's active cable list must, therefore, be made by means of the cable manufacturer's front-end services and regular synchronization of this information by the application installed on the smartphone is necessary for this to take effect.

It is worth noting that in this manner there are no particular constraints on the number of installed applications and therefore it is assumed that a user will not install the application and log in on devices which are not directly in their possession.

In an illustrative example not part of the claimed invention, the interaction of the charging station with the application installed on the smartphone takes place via a communication protocol based on Bluetooth^{®} technology. The application sends the tuple (UID, {CTID1, CTID2, CTID3, ...}) consisting of the unique identifier of the concerned user (UID) and the list of cables activated by the user {CTID1, CTID2, CTID3, ...} to the charging station.

It is worth noting that this mechanism takes place in a competitive manner by not imposing limits on the number of users requesting the delivery. In this case, there will be multiple tuples containing lists of cables for different users (UID1, {CTID1, CTID2, CTID3, ...}) (UID2, {CTID4, CTID5, CTID6, ...}) (UID3, {CTID7, CTID8, CTID9, ...}), etc.

The charging station is therefore informed of potential cables which can be connected to the connector of a power unit. This information may be limited in time.

When the cable is actually connected to a charging station, the step of identifying the cable described above allows identifying the inserted cable uniquely and to retrieve the unique token (CTID) associated with the identifier code contained in the cable itself.

By comparing the unique token of the connected cable with the tokens contained in the lists of expected cables {CTID1, CTID2, CTID3, ...}, {CTID4, CTID5, CTID6, ...}, {CTID7, CTID8, CTID9, ...}, it is thus possible to uniquely identify the user (UID) requesting the delivery, thus proceeding with the supplying of the service.

In an illustrative example not part of the claimed invention, with reference to the cable authentication procedure described above and illustrated in the block chart in figure 4, this step of identifying of the user is performed by the charging station either before or after the authentication algorithm is run. For example, if the outcome of the cable authentication algorithm is positive, the algorithm waits for the user identification procedure to be successfully completed during the step of waiting for authorization 218.

It is worth noting that since the cable is paired with only one user, it is possible to decide to lock the cable to prevent its use.

This function can be useful in case of theft or loss of the cable. By connecting to the cable manufacturer's front-end services and logging in, the user can decide to report the lost or stolen cable so as to block it.

A blocked cable cannot actually be used any longer for delivering the service.

A person skilled in the art may make changes and adaptations to the embodiments of the charging system of the invention or can replace elements with others which are functionally equivalent to satisfy contingent needs without departing from the scope of protection of the appended claims. All the features described above as belonging to one possible embodiment may be implemented independently from the other embodiments described.

## Claims

1. A charging system of a battery of an electric vehicle, in particular a bicycle, comprising a charging station (10) and at least one charging cable (12) connectable to a battery (2) to be charged, wherein the battery is of a first type, which allows charging as soon as current is supplied to the terminals of the charging cable, or of a second type, which requires to be queried by a control signal to connect the battery poles to the charging cable, wherein the charging station (10) comprises:
- a power supply unit (14) adapted to generate at least one battery supply voltage;
- a service power supply unit (16) adapted to generate a service voltage;
- a control unit (18) connected to the power supply unit and to the service power supply unit, the control unit being supplied by the service voltage;
- a regulator (20) connected to the control unit and adapted to supply a regulated charging current to the battery to be recharged;
- a female-type multipole charging connector (22) comprising:
- a positive terminal (B) and a negative terminal (A), connected to the regulator (20);
- a logic input (C) operatively connected to the control unit;
- a digital logic output (D) operatively connected to the control unit;
and wherein the charging cable comprises a first male-type multipole cable connector (24) adapted to be connected to the female-type multipole charging connector (22), and, at the opposite end of the cable, a second multipole cable connector (26) connectable to the battery, said first multipole cable connector (24) comprising:
- a positive terminal (B') and a negative terminal (A') connectable to the battery positive and negative poles by means of the second multipole cable connector (26) and to the positive (B) and negative (A) terminals of the female-type multipole charging connector (22);
- a connected connector check terminal (C'), connected to the negative terminal (A') and connectable to the logic input (C) of the female-type multipole charging connector (22);
- a battery enabling terminal (D') adapted to be connected to the digital logic output (D) of the female-type multipole charging connector (22), the second multipole cable connector (26) having only a positive pole and a negative pole, in case of charging cable connectable to the battery of the first type, and having a third pole for the control signal in addition to the positive and negative poles, in case of charging cable connectable to the battery of the second type,
the control unit (18) being provided with:
- a connected connector check circuit (28), operatively connected to the logic input (C) of the female-type multipole charging connector (22) and adapted to detect whether the logic input (C) is at the voltage present on the negative battery pole;
- a battery enabling circuit (30) adapted to supply an enabling signal to the digital logic output (D) adapted to allow the connection of the positive battery pole to the positive terminal (B') of the charging cable; the control unit (18) being programmed to implement a charging process which comprises the steps of:
- detecting, by means of the connected connector check circuit (28), whether the logic input (C) is at the voltage present on the negative battery pole (2);
- in the affirmative case, determining that the battery is of the second type and commanding the battery enabling circuit (30) to supply the enabling signal to the digital logic output (D);
- remaining in a waiting for enabling state for a predetermined time interval chosen so that the batteries of the second type can receive and recognize the enabling signal and reply by connecting the battery poles to the charging cable;
- at the end of said predetermined time interval, commanding the delivery of the charging current.

2. A charging system according to claim 1, wherein the control unit (18) is provided with a further voltage presence input (I) connected to the positive terminal (B) of the female-type multipole charging connector (22) and is programmed to check, at the end of the step of waiting for enabling, whether voltage corresponding to the voltage present on the positive battery pole is present on said voltage presence input (I).

3. A charging system according to claim 2, wherein the control unit is programmed to charge the battery with two different charging algorithms according to the voltage value present on the voltage presence input (I).

4. A charging system according to any one of the preceding claims, wherein:
- the power supply unit (14) is adapted to generate at least two different battery supply voltages,
- the system comprises at least two identical charging cables (12),
- the female-type multipole charging connector (22) and the first multipole cable connector (24) having an additional voltage identification terminal (F, F'), the voltage identification terminal (F) of the female-type multipole charging connector (22) being connected to the control unit (18),
- in one of the two charging cables the voltage identification terminal (F') being connected to one of the two positive or negative terminals (A', B') so that the control unit can detect a different voltage on the voltage identification terminal (F) according to whether said voltage identification terminal is connected to or disconnected from the positive or negative terminal of the cable connector and supplies a respective battery supply voltage to the regulator.

5. A charging system according to any one of the preceding claims, wherein the first multipole cable connector (24) is provided with an authentication integrated circuit comprising a memory unit (36) containing information on the source of the cable and connected to a further communication terminal (E') of the multipole cable connector, the multipole charging connector being provided with a corresponding communication terminal (E) connected to the control unit, the control unit being provided with a receiver integrated circuit (40) adapted to receive data from the authentication integrated circuit.

6. A charging system according to any one of the preceding claims, wherein the charging station (10) comprises a switch device (44), e.g. a relay, between the regulator (20) and the female-type multipole charging connector (22), which switch device is controlled by the control unit (18) to switch between an open position, in which it inhibits the passage of the charging electrical current from the regulator (20) to the female-type multipole charging connector (22), and an open position, in which it allows the passage of the charging electrical current from the regulator (20) to the female-type multipole charging connector (22).

7. A charging system according to any one of the preceding claims, wherein the charging cable and the charging station are provided with respective authentication circuits configured to implement a cable authentication algorithm which, in case of a positive outcome, enables charging the battery.

## Patentansprüche

1. Ladesystem einer Batterie eines Elektrofahrzeugs, insbesondere eines Fahrrads, das eine Ladestation (10) und mindestens ein Ladekabel (12) umfasst, das mit einer zu ladenden Batterie (2) verbindbar ist, wobei die Batterie eine eines ersten Typs, der das Laden erlaubt, sobald die Anschlüsse des Ladekabels mit Strom versorgt werden, oder eines zweiten Typs ist, der das Abfragen durch ein Steuer- bzw. Regelsignal zum Verbinden der Batteriepole mit dem Ladekabel erfordert, wobei die Ladestation (10) umfasst:
- eine Leistungsversorgungseinheit (14), die so angepasst ist, dass sie mindestens eine Batterieversorgungsspannung erzeugt,
- eine Betriebsleistungsversorgungseinheit (16), die so angepasst ist, dass sie eine Betriebsspannung erzeugt,
- eine Steuer- bzw. Regeleinheit (18), die mit der Leistungsversorgungseinheit und mit der Betriebsleistungsversorgungseinheit verbunden ist, wobei die Steuer- bzw. Regeleinheit mit der Betriebsspannung versorgt wird,
- einen Regler (20), der mit der Steuer- bzw. Regeleinheit verbunden ist und so angepasst ist, dass er die wiederaufzuladende Batterie mit einem geregelten Ladestrom versorgt;
- einen mehrpoligen Ladeverbinder (22) vom Buchsentyp, umfassend:
- einen positiven Anschluss (B) und einen negativen Anschluss (A), die mit dem Regler (20) verbunden sind,
- einen Logikeingang (C), der betriebsfähig mit der Steuer- bzw. Regeleinheit verbunden ist,
- einen digitalen Logikausgang (D), der betriebsfähig mit der Steuer- bzw. Regeleinheit verbunden ist,
und wobei das Ladekabel einen ersten mehrpoligen Kabelverbinder (24) vom Steckertyp, der so angepasst ist, dass er mit dem mehrpoligen Ladeverbinder (22) vom Buchsentyp verbunden ist, und am entgegengesetzten Ende des Kabels einen zweiten mehrpoligen Kabelverbinder (26) umfasst, der mit der Batterie verbindbar ist, wobei der erste mehrpolige Kabelverbinder (24) umfasst:
- einen positiven Anschluss (B') und einen negativen Anschluss (A'), die mittels des zweiten mehrpoligen Kabelverbinders (26) mit dem positiven und dem negativen Batteriepol und mit dem positiven (B) und dem negativen (A) Anschluss des mehrpoligen Ladeverbinders (22) vom Buchsentyp verbindbar sind,
- einen Verbundener-Verbinder-Prüfanschluss (C'), der mit dem negativen Anschluss (A') verbunden ist und mit dem Logikeingang (C) des mehrpoligen Ladeverbinders (22) vom Buchsentyp verbindbar ist,
- einen Batterieaktivierungsanschluss (D'), der so angepasst ist, dass er mit dem digitalen Logikausgang (D) des mehrpoligen Ladeverbinders (22) vom Buchsentyp verbunden ist, wobei der zweite mehrpolige Kabelverbinder (26) im Fall des Ladekabels, das mit der Batterie vom ersten Typ verbindbar ist, lediglich einen positiven Pol und einen negativen Pol aufweist, und im Fall des Ladekabels, das mit der Batterie vom zweiten Typ verbindbar ist, zusätzlich zu dem positiven und dem negativen Pol einen dritten Pol für das Steuer- bzw. Regelsignal aufweist,
wobei die Steuer- bzw. Regeleinheit (18) versehen ist mit:
- einer Verbundener-Verbinder-Prüfschaltung (28), die betriebsfähig mit dem Logikeingang (C) des mehrpoligen Ladeverbinders (22) vom Buchsentyp verbunden ist und so angepasst ist, dass sie erkennt, ob der Logikeingang (C) sich auf der Spannung befindet, die am negativen Batteriepol vorhanden ist,
- eine Batterieaktivierungsschaltung (30), die so angepasst ist, dass sie ein Aktivierungssignal in den digitalen Logikausgang (D) einspeist, das so angepasst ist, dass es die Verbindung des positiven Batteriepols mit dem positiven Anschluss (B') des Ladekabels ermöglicht; wobei die Steuer- bzw. Regeleinheit (18) programmiert ist, einen Ladeprozess zu implementieren, der die folgenden Schritte umfasst:
- Erkennen, mittels der Verbundener-Verbinder-Prüfschaltung (28), ob der Logikeingang (C) sich auf der Spannung befindet, die an dem negativen Batteriepol (2) vorhanden ist,
- wenn dies der Fall ist, Bestimmen, dass die Batterie vom zweiten Typ ist, und Erteilen eines Befehls an die Batterieaktivierungsschaltung (30), das Aktivierungssignal in den digitalen Logikausgang (D) einzuspeisen;
- Verbleiben in Erwartung des Aktivierungszustands während eines vorbestimmten Zeitintervalls, das so gewählt ist, dass die Batterien vom zweiten Typ das Aktivierungssignal empfangen und erkennen und durch Verbinden der Batteriepole mit dem Ladekabel antworten können;
- am Ende des vorbestimmten Zeitintervalls, Erteilen des Befehls zur Abgabe des Ladestroms.

2. Ladesystem nach Anspruch 1, wobei die Steuer- bzw. Regeleinheit (18) mit einem weiteren Spannungsvorhandenseinseingang (I) versehen ist, der mit dem positiven Anschluss (B) des mehrpoligen Ladeverbinders (22) vom Buchsentyp verbunden ist und so programmiert ist, dass er am Ende des Schritts des Erwartens des Aktivierens prüft, ob Spannung, die der Spannung entspricht, die an dem positiven Batteriepol vorhanden ist, an dem Spannungsvorhandenseinseingang (I) vorhanden ist.

3. Ladesystem nach Anspruch 2, wobei die Steuer- bzw. Regeleinheit so programmiert ist, dass sie die Batterie mit zwei verschiedenen Ladealgorithmen gemäß dem Spannungswert lädt, der an dem Spannungsvorhandenseinseingang (I) vorhanden ist.

4. Ladesystem nach einem der vorhergehenden Ansprüche, wobei:
- die Leistungsversorgungseinheit (14) so angepasst ist, dass sie mindestens zwei unterschiedliche Batterieversorgungsspannungen erzeugt,
- das System mindestens zwei identische Ladekabel (12) umfasst,
- der mehrpolige Ladeverbinder (22) vom Buchsentyp und der erste mehrpolige Kabelverbinder (24) einen zusätzlichen Spannungsidentifikationsanschluss (F, F') aufweisen, wobei der Spannungsidentifikationsanschluss (F) des mehrpoligen Ladeverbinders (22) vom Buchsentyp mit der Steuer- bzw. Regeleinheit (18) verbunden ist,
- in einem von den beiden Ladekabeln der Spannungsidentifikationsanschluss (F') derart mit einem der beiden von dem positiven oder dem negativen Anschluss (A', B') verbunden ist, dass die Steuer- bzw. Regeleinheit je nachdem, ob der Spannungsidentifikationsanschluss mit dem positiven oder negativen Anschluss des Kabelverbinders verbunden oder davon getrennt ist, eine unterschiedliche Spannung an dem Spannungsidentifikationsanschluss (F) erkennen kann und den Regler mit einer entsprechenden Batterieversorgungsspannung versorgt.

5. Ladesystem nach einem der vorhergehenden Ansprüche, wobei der erste mehrpolige Kabelverbinder (24) mit einer integrierten Authentifizierungsschaltung versehen ist, die eine Speichereinheit (36) umfasst, die Informationen über die Quelle des Kabels enthält und mit einem weiteren Kommunikationsanschluss (E') des mehrpoligen Kabelverbinders verbunden ist, wobei der mehrpolige Ladeverbinder mit einem entsprechenden Kommunikationsanschluss (E) versehen ist, der mit der Steuer- bzw. Regeleinheit verbunden ist, wobei die Steuer- bzw. Regeleinheit mit einer integrierten Empfängerschaltung (40) versehen ist, die so angepasst ist, dass sie Daten von der integrierten Authentifizierungsschaltung empfängt.

6. Ladesystem nach einem der vorhergehenden Ansprüche, wobei die Ladestation (10) eine Schaltervorrichtung (44), z. B. ein Relais, zwischen dem Regler (20) und dem mehrpoligen Ladeverbinder (22) vom Buchsentyp umfasst, wobei die Schaltervorrichtung durch die Steuer- bzw. Regeleinheit (18) so gesteuert bzw. geregelt wird, dass sie zwischen einer offenen Position, in der sie den Durchgang des elektrischen Ladestroms von dem Regler (20) zum mehrpoligen Ladeverbinder (22) vom Buchsentyp sperrt, und einer offenen Position schaltet, in der sie den Durchgang des elektrischen Ladestroms von dem Regler (20) zum mehrpoligen Ladeverbinder (22) vom Buchsentyp erlaubt.

7. Ladesystem nach einem der vorhergehenden Ansprüche, wobei das Ladekabel und die Ladestation mit entsprechenden Authentifizierungsschaltungen versehen sind, die so ausgestaltet sind, dass sie einen Kabelauthentifizierungsalgorithmus implementieren, der bei einem positiven Ergebnis das Laden der Batterie aktiviert.

## Revendications

1. Système de charge d'une batterie d'un véhicule électrique, en particulier d'une bicyclette, comprenant un poste de charge (10) et au moins un câble de charge (12) pouvant être connecté à une batterie (2) à charger, où la batterie est d'un premier type, qui permet une charge dès que le courant est apporté aux bornes du câble de charge, ou d'un deuxième type, qui nécessite d'être interrogé par un signal de commande pour connecter les pôles de batterie au câble de charge, où le poste de charge (10) comprend :
- une unité d'alimentation électrique (14) adaptée pour générer au moins une tension d'alimentation de batterie ;
- une unité d'alimentation électrique de service (16) adaptée pour générer une tension de service ;
- une unité de commande (18) connectée à l'unité d'alimentation électrique et à l'unité d'alimentation électrique de service, l'unité de commande étant alimentée par la tension de service ;
- un régulateur (20) connecté à l'unité de commande et adapté pour apporter un courant de charge régulé à la batterie à recharger ;
- un connecteur de charge à pôles multiples de type femelle (22) comprenant :
- une borne positive (B) et une borne négative (A), connectées au régulateur (20) ;
- une entrée de logique (C) connectée fonctionnellement à l'unité de commande ;
- une sortie de logique numérique (D) fonctionnellement connectée à l'unité de commande ;
et où le câble de charge comprend un premier connecteur de câble à pôles multiples de type mâle (24) adapté pour être connecté au connecteur de charge à pôles multiples de type femelle (22), et, au niveau de l'extrémité opposée du câble, un deuxième connecteur de câble à pôles multiples (26) pouvant être connecté à la batterie,
ledit premier connecteur de câble à pôles multiples (24) comprenant :
- une borne positive (B') et une borne négative (A') pouvant être connectées aux pôles positif et négatif de batterie à l'aide du deuxième connecteur de câble à pôles multiples (26) et aux bornes positive (B) et négative (A) du connecteur de charge à pôles multiples de type femelle (22) ;
- une borne de vérification de connecteur connecté (C'), connectée à la borne négative (A') et pouvant être connectée à l'entrée de logique (C) du connecteur de charge à pôle multiples de type femelle (22) ;
- une borne d'activation de batterie (D') adaptée pour être connectée à la sortie de logique numérique (D) du connecteur de charge à pôles multiples de type femelle (22), le deuxième connecteur de câble à pôles multiples (26) présentant seulement un pôle positif et un pôle négatif, en cas de câble de charge pouvant être connecté à la batterie du premier type, et possédant un troisième pôle pour le signal de commande en plus des pôles positif et négatif,
en cas de câble de charge pouvant être connecté à la batterie du deuxième type, l'unité de commande (18) étant dotée :
- d'un circuit de vérification de connecteur connecté (28), fonctionnellement connecté à l'entrée de logique (C) du connecteur de charge à pôles multiples de type femelle (22) et adapté pour détecter si l'entrée de logique (C) est à la tension présente sur le pôle de batterie négatif ;
- d'un circuit d'activation de batterie (30) adapté pour apporter un signal d'activation à la sortie de logique numérique (D) adapté pour permettre la connexion du pôle de batterie positif à la borne positive (B') du câble de charge ;
l'unité de commande (18) étant programmée pour mettre en oeuvre un processus de charge qui comprend les étapes consistant à :
- détecter, à l'aide du circuit de vérification de connecteur connecté (28), si l'entrée de logique (C) est à la tension présente sur le pôle de batterie négatif (2) ;
- dans le cas affirmatif, déterminer que la batterie est du deuxième type et ordonner au circuit d'activation de batterie (30) d'apporter le signal d'activation à la sortie de logique numérique (D) ;
- rester dans un état d'attente d'activation pendant un intervalle de temps prédéterminé choisi de telle sorte que les batteries du deuxième type puissent recevoir et reconnaître le signal d'activation et répondre en connectant les pôles de batterie au câble de charge ;
- à la fin dudit intervalle de temps prédéterminé, ordonner l'acheminement du courant de charge.

2. Système de charge selon la revendication 1, où l'unité de commande (18) est dotée d'une autre entrée de présence de tension (I) connectée à la borne positive (B) du connecteur de charge à pôles multiples de type femelle (22) et est programmée pour vérifier, à la fin de l'étape d'attente d'activation, si une tension correspondant à la tension présente sur le pôle de batterie positif est présente sur ladite entrée de présence de tension (I).

3. Système de charge selon la revendication 2, où l'unité de commande est programmée pour charger la batterie avec deux algorithmes de charge différents en fonction de la valeur de tension présente sur l'entrée de présence de tension (I).

4. Système de charge selon l'une quelconque des revendications précédentes, où :
- l'unité d'alimentation électrique (14) est adaptée pour générer au moins deux tensions d'alimentation de batterie différentes,
- le système comprend au moins deux câbles de charge (12) identiques,
- le connecteur de charge à pôles multiples de type femelle (22) et le connecteur de câble à pôles multiples (24) présentant une borne d'identification de tension supplémentaire (F, F'), la borne d'identification de tension (F) du connecteur de charge à pôles multiples de type femelle (22) étant connectée à l'unité de commande (18),
- dans l'un des deux câbles de charge la borne d'identification de tension (F') étant connectée à l'une des deux bornes positive ou négative (A', B') de telle sorte que l'unité de commande peut détecter une tension différente sur la borne d'identification de tension (F) selon que ladite borne d'identification de tension est connectée à ou déconnectée de la borne positive ou négative du connecteur de câble et apporte une tension d'alimentation de batterie respective au régulateur.

5. Système de charge selon l'une quelconque des revendications précédentes, où le premier connecteur de câble à pôles multiples (24) est doté d'un circuit intégré d'authentification comprenant une unité de mémoire (36) contenant des informations sur la source du câble et connectée à une autre borne de communication (E') du connecteur de câble à pôles multiples, le connecteur de câble à pôles multiples étant doté d'une borne de communication (E) correspondante connectée à l'unité de commande, l'unité de commande étant dotée d'un circuit intégré récepteur (40) adapté pour recevoir des données provenant du circuit intégré d'authentification.

6. Système de charge selon l'une quelconque des revendications précédentes, où le poste de charge (10) comprend un dispositif de commutation (44), par exemple un relais, entre le régulateur (20) et le connecteur de charge à pôles multiples de type femelle (22), lequel dispositif de commutation est commandé par l'unité de commande (18) pour commuter entre une position ouverte, dans laquelle il empêche le passage du courant électrique de charge du régulateur (20) vers le connecteur de charge à pôles multiples de type femelle (22), et une position ouverte, dans laquelle il permet le passage du courant électrique de charge du régulateur (20) vers le connecteur de charge à pôles multiples de type femelle (22).

7. Système de charge selon l'une quelconque des revendications précédentes, où le câble de charge et le poste de charge sont dotés de circuits d'authentification respectifs configurés pour mettre en oeuvre un algorithme d'authentification de câble qui, en cas de résultat positif, permet la charge de la batterie.
